# EUROPÄISCHE PATENTSCHRIFT

(11) **EP 3 237 838 B1**
(45) Veröffentlichungstag und Bekanntmachung des Hinweises auf die Patenterteilung: **16.10.2019**
(21) Anmeldenummer: 15771118.5
(22) Anmeldetag: 30.09.2015
(51) Int. Cl.: G01B 5/14, G01B 13/10

(54) **SPALTMESSGERÄT UND LUFTSPALTMESSUNGSVERFAHREN, ZUM VERMESSEN EINER LUFTSPALTDICKE, INSBESONDERE EINES GENERATORS EINER WINDENERGIEANLAGE**
GAP MEASURING DEVICE AND AIR GAP MEASURING METHOD, FOR MEASURING AN AIR GAP THICKNESS, IN PARTICULAR OF A WIND TURBINE GENERATOR
DISPOSITIF ET PROCÉDÉ DE MESURE D'UN ENTREFER, POUR MESURER LA TAILLE D'UN ENTREFER, EN PARTICULIER D'UN GÉNÉRATEUR D'UNE ÉOLIENNE

(30) Priorität: 22.12.2014 DE 102014226825
(43) Veröffentlichungstag der Anmeldung: 01.11.2017
(73) Patentinhaber: Wobben Properties GmbH, 26607 Aurich (DE)
(72) Erfinder: RÖER, Jochen, 27777 Ganderkesee (DE)
(74) Vertreter: Eisenführ Speiser
(86) Internationale Anmeldenummer: PCT/EP2015/072510
(87) Internationale Veröffentlichungsnummer: WO 2016/102088

(56) Entgegenhaltungen:
- JP-A- 2014 202 569
- JP-U- S58 138 011
- US-A1- 2009 178 289
- US-A1- 2014 336 617

## Beschreibung

Die vorliegende Erfindung betrifft ein Spaltmessgerät zum Vermessen einer Luftspaltdicke, insbesondere eines Generators einer Windenergieanlage. Die vorliegende Erfindung betrifft ebenfalls ein Luftspaltmessungsverfahren zum Vermessen einer Luftspaltdicke, insbesondere eines Generators einer Windenergieanlage.

Als Generator soll erfindungsgemäß insbesondere ein Synchrongenerator, vorzugsweise ein langsam drehender Ringgenerator verstanden werden. Unter einem langsam drehenden Generator wird erfindungsgemäß eine Umdrehungsgeschwindigkeit unterhalb von 40 Umdrehungen pro Minute verstanden.

Ein Luftspalt zwischen Rotor und Stator des erfindungsgemäß betrachteten Generators liegt typischerweise im einstelligen Millimeterbereich, beispielsweise im Bereich unterhalb 3 mm. Für eine zuverlässige Funktionsweise solcher Generatoren ist es von zentraler Bedeutung, dass der Luftspalt sich entlang seines Umfangs möglichst wenig ändert. Neben einer präzisen Ausrichtung zwischen Rotor und Stator kommt es daher auch darauf an, dass beispielsweise infolge von Fertigungsungenauigkeiten entstehende Luftspaltschwankungen aufgefunden werden können. Je nachdem, ob diese Luftspaltschwankungen aufgrund einer Unwucht des Rotors relativ zum Stator hervorgerufen werden, oder aufgrund geometrischer Abweichungen der Bauteile; beides muss ermittelt werden können.

Zum Vermessen eines Generatorluftspalts einer Windenergieanlage geeignete Spaltmessgeräte sind grundsätzlich aus dem Stand der Technik bekannt. So beispielsweise Fühlerlehren mit Blechstreifen aufsteigender Dicke, welche sukzessive in einen Luftspalt eingeführt werden. Der dickste noch in den Luftspalt einführbare Blechstreifen gibt die Größe des Luftspalts an. Bei diesem im Stand der Technik bislang durchgeführten Messverfahren muss der mechanische Fühler sich durch die gesamte Länge des Luftspalts hindurch erstrecken, parallel zur Rotationsachse des Rotors. Da bei den Generatoren von Windenergieanlagen die Ausdehnung des Luftspalts in Richtung der Rotationsachse leicht einen Meter oder mehr betragen kann, ist der händische Aufwand und erforderliche Zeitbedarf für derartige Messvorgänge beträchtlich. Zudem lässt sich nur schwer beherrschen, ob die Fühlerlehre tatsächlich in der gewünschten Orientierung durch den Spalt hindurch verläuft, oder ob Sie irgendwo verkantet. Somit ist die begrenzte Zuverlässigkeit und insbesondere der große manuelle Aufwand bislang als Nachteil empfunden worden.

Ebenfalls aus dem Stand der Technik bekannt sind kapazitive Fühlerlehren, die mit einem zum Einführen in einen Luftspalt bestimmten Federelement ausgestattet sind. Eine Vorrichtung zum Vermessen von Spalten mit einem Piezoelement als Messwandler ist der Druckschrift DE 100 15 155 A1 offenbart. Die bekannten kapazitiven oder resistiven Messtechniken bieten zwar eine hohe Messwertauflösung, weisen allerdings Defizite hinsichtlich der Robustheit auf.

US 2009/178289 A1 oder US 2014/336617 A1 zeigen jeweils Vorrichtungen zum Messen oder Aufweiten eines Durchmessers eines Hohlraumes oder einer Körper-Passage mittels eines Ballonkörpers.

JP 2014 202569 A oder JP S58 138011 U betreffen Vorrichtungen zum Vermessen eines Luftspaltes. Die Vorrichtungen umfassen jeweils einen Messkopf mit zumindest zwei zueinander beweglichen Messplatten.

Somit lag der vorliegenden Erfindung die Aufgabe zugrunde, ein Spaltmessgerät anzugeben, welches die aufgefundenen Nachteile möglichst so weitgehend behebt. Insbesondere lag der Erfindung die Aufgabe zugrunde, ein Spaltmessgerät anzugeben, welches befriedigend genaue Messergebnisse liefert und gleichzeitig sehr robust ist. Gemäß eines ersten Aspekts der Erfindung wird die Aufgabe gelöst durch ein Spaltmessgerät zum Vermessen einer Luftspaltdicke mit einem durch Druckbeaufschlagung expandierbaren Hydraulik-Messkopf zum Einbringen in einen zu vermessenden Luftspalt, wobei der Hydraulik-Messkopf als Druckkissen ausgebildet, einer Kolbenpumpe zur Druckbeaufschlagung und Expansion des Hydraulik-Messkopfes mit einer Hydraulikflüssigkeit, wobei der Hydraulik-Messkopf dazu eingerichtet ist, mittels Expansion mit den Begrenzungsflächen, die den Luftspalt definieren, derart in Anlage zu gelangen, dass nach Anlage an den Begrenzungsflächen eine weitere Expansion in Richtung der Begrenzungsflächen und quer und/oder tangential zu diesen, unmöglich ist, und ein Anzeigeelement zur unmittelbaren oder mittelbaren Anzeige eines in den Hydraulik-Messkopf eingebrachten Hydraulikflüssigkeitsvolumens als Maß für die Luftspaltdicke des Luftspalts.

Die Erfindung schließt die Erkenntnis ein, dass eine Vermessen einer Luftspaltdicke mit einer Fühlerlehre gemäß des Standes der Technik bedienerabhängig, langwierig und ungenau ist. Die Erfindung schließt ebenfalls die Erkenntnis ein, dass Spaltmessgeräte mit einem kapazitiven Sensor im Umfeld von elektrischen Feldern zu Ungenauigkeiten neigen. Desweiteren erfordern Spaltmessgeräte mit einem kapazitiven oder piezoelektrischen Messwandler stets eine Stromversorgung.

Als besonders schwerwiegender Nachteil von Spaltmessgeräten gemäß des Standes der Technik wurde erkannt, dass diese in expandiertem Zustand in einen Spalt eingeschoben werden müssen um im Zuge des Einschiebens auf die tatsächliche Luftspaltdicke zusammengedrückt zu werden. Dies kann beispielsweise zur Abrasion von Metallspänen bewirken, was zu einer nachteiligen Veränderung der magnetischen Flussdichte im Luftspalt führen kann.

Durch das Spaltmessgerät der vorliegenden Erfindung werden diese Nachteile vermieden. Ein expandierbarer - aber vorzugsweise noch nicht oder jedenfalls nur teilweise expandierter - Hydraulik-Messkopf wird in den zu vermessenden Luftspalt eingebracht. Dies verhindert nachteilige Abrasion. Durch Betätigung einer Kolbenpumpe wird der Hydraulik-Messkopf mit einer Hydraulikflüssigkeit druckbeaufschlagt, so dass der Hydraulik-Messkopf in Richtung der den Luftspalt definierenden Begrenzungsflächen, bezogen auf einen Generator einer Windenergieanlage beispielsweise in radialer Richtung, expandiert.

Wenn der Hydraulik-Messkopf an den Begrenzungsflächen anliegt, ist eine weitere Expansion in Richtung der Begrenzungsflächen, vorzugsweise auch quer und/oder tangential dazu, unmöglich. Das in diesem Moment in dem Hydraulik-Messkopf befindliche bzw. bis zu diesem Moment eingebrachte Hydraulikflüssigkeitsvolumen ist ein Maß für die Luftspaltdicke des Luftspalts. Durch dieses hydraulische Messprinzip wird die Messung unabhängig von etwaigen Störfeldern, unabhängig von einer Stromversorgung und somit robust.

Erfindungsgemäß ist der Hydraulik-Messkopf als Druckkissen ausgebildet. Das Druckkissen kann beispielsweise aus zwei kantenverbundenen Gummimatten bestehen. Der Hydraulik-Messkopf kann eine durch Druckbeaufschlagung expandierbare Hydraulikkammer aufweisen oder aus einer solchen bestehen. Bevorzugt weist das Spaltmessgerät einen Hydraulikschlauch auf, mit dem der Hydraulik-Messkopf und die Kolbenpumpe verbindbar und/oder verbunden sind. Der Hydraulikschlauch kann aus Kunststoff gefertigt sein und jeweils ein Anschlusselement für den Hydraulik-Messkopf und die Kolbenpumpe aufweisen.

Bevorzugt ist der Hydraulik-Messkopf derart ausgebildet, dass sie bei Druckbeaufschlagung proportional zum Anstieg des in den Hydraulik-Messkopf eingebrachten Hydraulikflüssigkeitsvolumens in Erstreckungsrichtung einer Luftspaltdicke, bezogen auf einen Generator einer Windenergieanlage beispielsweise in radialer Richtung, expandiert. Dies erleichtert die Anzeige des in den Hydraulik-Messkopf eingebrachten Hydraulikflüssigkeitsvolumens als Maß für die Luftspaltdicke. Der Hydraulik-Messkopf kann gekrümmt ausgebildet sein, so dass er nur in einer Vorzugsrichtung in einen Generatorluftspalt eingelegt werden kann. Bevorzugt ist der Hydraulik-Messkopf länglich ausgebildet und kann in länglicher Richtung gekrümmt, bevorzugt meniskusförmig ausgebildet sein. Bevorzugt weist der Hydraulik-Messkopf, zumindest an Teilen seiner Oberfläche die zur Anlage an die Begrenzungsflächen des Luftspalts bestimmt sind, eine reibungsarme Oberfläche auf. Vorteilhafterweise kann sich der Hydraulik-Messkopf im Zuge seiner Expansion selbsttätig ausrichten. Der Hydraulik-Messkopf kann - bezogen auf einen rotationssymmetrischen Luftspalt eines Ringgenerators - in tangentialer Richtung eine größere Erstreckung als in radialer Richtung aufweisen, bevorzugt sowohl in expandiertem als auch in nicht expandiertem Zustand. Bevorzugt weist ein bestimmungsgemäß in einen Luftspalt eines Ringgenerators eingebrachter Hydraulik-Messkopf in axialer Generatorrichtung eine größere Erstreckung auf als in tangentialer Generatorrichtung.

Vorzugsweise weist der Hydraulik-Messkopf eine Breite zwischen 10 mm und 30 mm auf. Bevorzugt beträgt die Breite ca. 20 mm. Hierdurch kann erreicht werden, dass die Krümmung des Luftspaltes keinen wesentlichen Einfluss auf Messergebnisse hat. Der Sensor kann von der Seite her gesehen, d.h. rechtwinklig zur Expansionsrichtung gesehen, eine Linsenform aufweisen. Der Krümmungsradius des Hydraulik-Messkopfes, kann, insbesondere in einer linsenförmigen Ausgestaltung ca. 50 mm betragen.

Um den Hydraulik-Messkopf beispielsweise gegen eine Perforation zu schützen, kann diese eine Kapselung aufweisen. Bevorzugt erfolgt die Kapselung durch einen Blechstreifen, der sich bevorzugt entlang derjenigen Seiten des Hydraulik-Messkopfes erstreckt, die zur Anlage an die Begrenzungsflächen bestimmt sind, die den Luftspalt definieren.

Ist eine Kapselung vorgesehen, so können Flächenanteile der Kapselung zur Anlage an die Begrenzungsflächen, die den Luftspalt definieren, bestimmt sein. Ist keine Kapselung des Hydraulik-Messkopfes vorgesehen, so kann diese unmittelbar zur Anlage an die Begrenzungsflächen gebracht werden. Ist andererseits eine Kapselung vorgesehen, so kann der Hydraulik-Messkopf mittelbar zur Anlage an die Begrenzungsflächen gebracht werden. Die Kapselung kann ausgebildet sein um eine Rückstellkraft auf den Hydraulik-Messkopf auszuüben um so ein Rückführen des Hydraulik-Messkopfes aus einem Expansionszustand in einen Ausgangszustand zu bewirken oder zu begünstigen. Bevorzugt wirkt die Kapselung als Führungselement um eine proportionale Expansion des Hydraulik-Messkopfes zu begünstigen.

Bevorzugt ist das Anzeigeelement eine an der Kolbenpumpe angeordnete Skala. Weiter bevorzugt ist die Kolbenpumpe wenigstens im Bereich der Skala transparent, so dass ein Hydraulikflüssigkeitsvolumen ähnlich wie bei einer medizinischen Spritze abgelesen werden kann. Beispielweise kann an der Skala ein Hydraulikflüssigkeitsvolumen in Milliliter angetragen sein.

Bevorzugt ist eine Skala derart an der Kolbenpumpe angetragen, dass bei vollständig eingeschobener Kolbenpumpe, d.h. maximal expandiertem Hydraulik-Messkopf, der Betrag des maximal in dem Hydraulik-Messkopf möglichen Hydraulikflüssigkeitsvolumens in Höhe des Pumpenkolbens abgetragen ist. In Kolbenauszugsrichtung können graduell sinkende Beträge eines Hydraulikflüssigkeitsvolumens angetragen sein. Somit ist ein unmittelbares Anzeigen des eingebrachten Hydraulikflüssigkeitsvolumens als Maß für die zu messende Luftspaltdicke abzulesen. An der Skala kann auch eine Strecke, beispielsweise in Millimeter, als mittelbare Anzeige eines in den Hydraulik-Messkopf bis zu dessen Anlage an die Begrenzungsflächen eingebrachten Hydraulikflüssigkeitsvolumens angetragen sein. Mittelbar bedeutet zum Beispiel in diesem Zusammenhang eine Umrechnung eines Hydraulikflüssigkeitsvolumens in eine Strecke durch Antragen einer entsprechenden Skala. Ein Streckenskala ist für einen Anwender deutlich komfortabler, da eine Luftspaltdicke ohne Umrechnung durch den Anwender abgelesen werden kann. Um ein Ablesen weiter zu vereinfachen kann die Skala einen Maßstrich aufweisen, der eine optimale Luftspaltdicke, beispielsweise 2mm, kennzeichnet. Die Kolbenpumpe kann auch eine verschiebbare Banderole als Ablesehilfe aufweisen, die durch Verschieben entlang der Kolbenpumpe bedarfsweise auf eine optimale Luftspaltdicke eingestellt werden kann.

Vorzugsweise, insbesondere falls sich ein Zusammenhang zwischen Expansion der Hydraulik-Messkopfes und der Kolbenstellung als nicht linear herausstellt, ist das Spaltmessgerät derart kalibriert, dass an der Skala der Kolbenpumpe direkt die Luftspaltdicke in mm ablesbar ist. Die Kolbenpumpe kann einen insbesondere integrierten, besonders bevorzugt elektrischen, Wegsensor aufweisen, mittels dem eine Luftspaltdicke messbar ist. Vorzugsweise wird die Luftspaltdicke zur Anzeige oder zur Speicherung in einem Messsystem gebracht.

Die Skala ist bevorzugt linear skaliert. Die Skala kann auch ganz oder abschnittsweise nichtlinear skaliert sein, um einen Hydraulik-Messkopf zu berücksichtigen, dessen Expansionsverhalten unproportional oder teilweise unproportional zum Anstieg des in den Hydraulik-Messkopf eingebrachten Hydraulikflüssigkeitsvolumens ist.

Das Anzeigeelement kann beispielsweise als Digitalanzeige ausgebildet sein. Das Spaltmessgerät kann elektronische Mittel zum Speichern des in den Hydraulik-Messkopf eingebrachten Hydraulikflüssigkeitsvolumens als Messwert aufweisen, beispielsweise einen Messspeicher. Der Messspeicher kann eine Datenschnittstelle zum Auslesen der Messwerte aufweisen. Dies erleichtert ein Dokumentieren vermessener Luftspaltdicken.

In einer bevorzugten Ausgestaltung weist der Hydraulik-Messkopf eine Tiefenskala auf, mittels derer neben der ermittelten Luftspaltdicke auch eine auf den Generator bezogene axiale Position, an der die Luftspaltdicke ermittelt wurde, erfassbar ist. Die Tiefenskala kann beispielsweise eine in Millimeter skalierte Skala sein und kann darüber Auskunft geben, wie tief der Hydraulik-Messkopf in axialer Richtung in den Generatorluftspalt eingeschoben wurde. Die axiale Position des Spaltmaßes kann mittels eines vom Spaltmessgerät umfassten elektrischen Tiefenmesssystems erfassbar sein.

In einer weiteren bevorzugten Ausgestaltung ist die Kolbenpumpe zur manuellen Betätigung ausgebildet. Ein maximaler Hydrauliksystemdruck liegt bevorzugt unter 50 Bar, weiter bevorzugt unter 20 Bar, besonders bevorzugt unter 2 Bar. In einer weiteren bevorzugten Ausgestaltung weist die Kolbenpumpe eine eingebaute und/oder an ihr angeordnete Entkopplungsfeder, insbesondere Druckfeder auf. Somit kann der Hydraulik-Messkopf vorteilhafterweise definiert und reproduzierbar im zu vermessenden Luftspalt an den Begrenzungsflächen des Luftspalts zu Anlage gebracht werden.

Eine Hydraulikflüssigkeit kann beispielsweise ein Hydrauliköl auf Mineralölbasis, ein Triglycerid, oder Ähnliches sein. Liegt ein maximaler Hydrauliksystemdruck liegt unter 2 Bar, so kann auch Wasser als Hydraulikflüssigkeit eingesetzt werden. Die Hydraulikflüssigkeit kann eingefärbt sein, um ein Ablesen des Anzeigeelements zu erleichtern Im Druckanwendungsbereich des Spaltmessgerät ist die Hydraulikflüssigkeit als inkompressibel anzusehen.

Es hat sich als besonders vorteilhaft herausgestellt wenn der Hydraulik-Messkopf und die Kolbenpumpe über einen Hydraulikschlauch miteinander verbunden und mit einer Hydraulikflüssigkeit anwendungsbereit, insbesondere herstellungsseitig befüllt sind. Somit kann ein zeitaufwendiges Kalibrieren des Spaltmessgeräts durch den Anwender entfallen. Bevorzugt ist das Spaltgerät derart dimensioniert und/oder kalibriert, dass die Hydraulikkamer proportional zum eingebrauchten Hydraulikflüssigkeitsvolumen expandiert. Besonders bevorzugt ist das Spaltmessgerät entlüftet und/oder weist eine Entlüftungsvorrichtung auf. Eine Beeinflussung der Messung durch kompressible Lufteinschlüsse im Spaltmessgerät kann so vermieden werden.

Bevorzugt ist das Spaltmessgerät ein geschlossenes hydraulisches System. Bevorzugt ist das Hydraulikflüssigkeitsvolumen im entlüfteten Spaltmessgerät konstant. Besonders bevorzugt ist die Summe der Hydraulikflüssigkeit in den Arbeitsvolumina des Hydraulik-Messkopfes und des Kolbenpumpe konstant. Das Hydraulikflüssigkeitsvolumen im Spaltmessgerät beträgt bevorzugt weniger als 100 ml, besonders bevorzugt weniger als 10 ml. Bevorzugt beträgt ein Hub des Pumpkolbens des Kolbenpumpe höchstens 150mm. Weiter bevorzugt beträgt der Kolbendurchmesser des Pumpkolbens höchstens 20mm.

Gemäß eines zweiten Aspekts der Erfindung wird die Aufgabe gelöst durch ein Luftspaltmessungsverfahren zur Vermessung einer Luftspaltdicke, insbesondere eines Generators einer Windenergieanlage, mit den Schritten:
- Einbringen einer durch Druckbeaufschlagung expandierbaren als Druckkissen ausgebildeten Hydraulik-Messkopfes in einen zu vermessenden Luftspalt,
- Druckbeaufschlagen und Expansion des Hydraulik-Messkopfes mit einer Hydraulikflüssigkeit derart, dass die expandierte Hydraulik-Messkopf an den Begrenzungsflächen, die den Luftspalt definieren, derart anliegt, dass nachdem dieser an den Begrenzungsflächen anliegt ein weiteres Expandieren in Richtung der Begrenzungsflächen und quer und/oder tangential zu diesen, unmöglich ist, und
- Bestimmen eines in den Hydraulik-Messkopf bis zu dessen Anlage an die Begrenzungsflächen eingebrachten und/oder befindlichen Hydraulikflüssigkeitsvolumens als Maß für die Luftspaltdicke des Luftspalts.

Bevorzugt wird das Luftspaltmessungsverfahren mit einem Spaltmessgerät gemäß des ersten Aspekts der Erfindung durchgeführt.

In einer bevorzugten Ausgestaltung umfasst das Bestimmen des in den Hydraulik-Messkopf eingebrachten Hydraulikflüssigkeitsvolumens ein Ablesen eines Anzeigeelements.

Bevorzugt erfolgt das Druckbeaufschlagen des Hydraulik-Messkopfes manuell, insbesondere mit einer Betätigungskraft von weniger als 100 N koaxial zur Bewegungsrichtung der Kolbenpumpe. Ist die Kolbenpumpe beispielsweise spritzenartig ausgebildet, kann die Betätigungskraft eine Daumenkraft sein. Besonders bevorzugt erfolgt ein Einbringen einer Betätigungskraft über eine in die Kolbenpumpe eingebaute und/oder an der Kolbenpumpe vorgesehene Entkopplungsfeder, insbesondere Druckfeder. Vorteilhafterweise kann derart eine auf die Hydraulikflüssigkeit wirkende Kraft von einer Betätigungskraft, insbesondere Daumenkraft entkoppelt werden.

In einer weiteren bevorzugten Ausgestaltung weist das Luftspaltmessungsverfahren ein Rückführen des Hydraulik-Messkopfes aus einem Expansionszustand in einen Ausgangszustand durch Erzeugen eines Unterdrucks in dem Hydraulik-Messkopf auf. Ein Unterdruck kann beispielsweise durch eine Betätigung der Kolbenpumpe erfolgen.

Das Luftspaltmessungsverfahren kann durch Merkmale weitergebildet sein, die mit Bezug auf den ersten Aspekt der Erfindung beschrieben sind. Vorteile gelten in analoger Weise.

Gemäß eines dritten Aspekts der Erfindung wird die Aufgabe gelöst durch die Verwendung eines Spaltmessgeräts gemäß des ersten Aspekts der Erfindung zur Vermessung eines Generatorluftspalts einer Windenergieanlage. Die Verwendung kann durch Merkmale weitergebildet sein, die mit Bezug auf den ersten und/oder zweiten Aspekt der Erfindung beschrieben sind. Vorteile gelten in analoger Weise.

Ausführungsbeispiele der Erfindung werden nun nachfolgend anhand der Zeichnungen beschrieben. Weitere Vorteile, Merkmale und Einzelheiten der Erfindung ergeben sich aus der nachfolgenden Beschreibung der bevorzugten Ausführungsbeispiele sowie anhand der Zeichnungen; diese zeigen in:
Fig. 1 eine schematische Darstellung eines erfindungsgemäßen Spaltmessgeräts zum Vermessen eines Generatorluftspalts einer Windenergieanlage;
Fig. 2 eine schematische Darstellung einer bevorzugten Ausgestaltung eines Hydraulik-Messkopfes eines erfindungsgemäßen Spaltmessgeräts;
Fig. 3 eine schematische Darstellung eines Hydraulik-Messkopfes eines erfindungsgemäßen Spaltmessgeräts platziert in einem Ringgenerator einer Windenergieanlage;
Fig. 4 eine schematische Darstellung einer bevorzugten Ausführungsform eines Luftspaltmessungsverfahren zur Vermessung eines Generatorluftspalts einer Windenergieanlage.

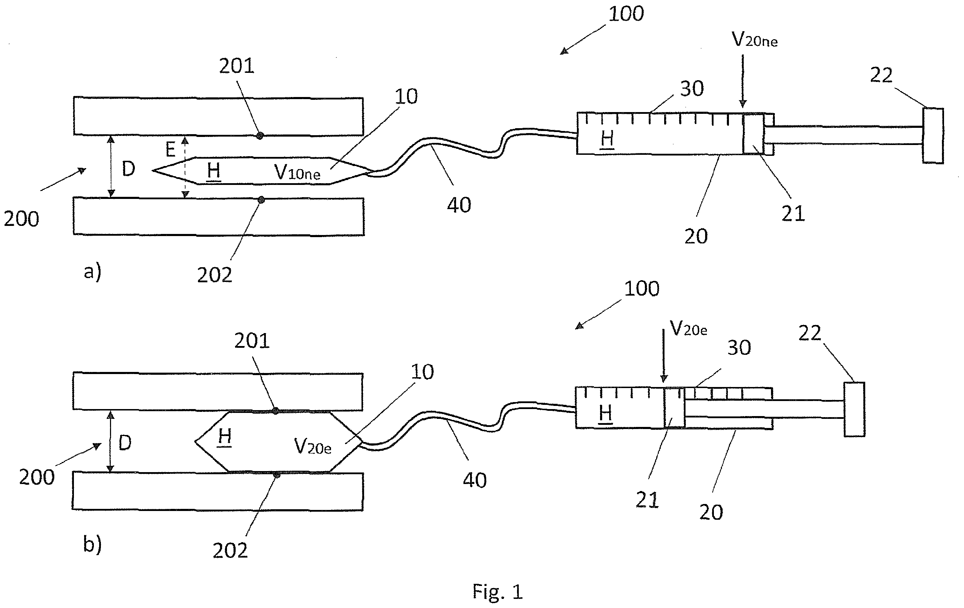

Ein Spaltmessgerät 100 in Fig. 1 weist einen als Druckkissen ausgebildeten Hydraulik-Messkopf 10, eine als Spritze ausgebildete Kolbenpumpe 20 zur Druckbeaufschlagung des Hydraulik-Messkopfes 10, ein als lineare Skala ausgebildetes und an der Kolbenpumpe 20 angeordnetes Anzeigeelement 30, sowie einen Hydraulikschlauch 40 auf. Der Hydraulik-Messkopf 10 und die Kolbenpumpe 20 sind über den Hydraulikschlauch 40 miteinander verbunden und mit einer Hydraulikflüssigkeit H, vorliegend einem Hydrauliköl, anwendungsbereit befüllt. Das Spaltmessgerät 100 ist vollständig entlüftet. Die als Spritze ausgebildete Kolbenpumpe 20 weist einen bewegbaren Pumpkolben 21 und ein Bedienelement 22 auf. Über das Bedienelement 22 als Kraftangriffspunkt für eine Daumenkraft ist der Pumpkolben 21 manuell betätigbar. Eine Krafteinleitung erfolgt koaxial zur Bewegungsrichtung des Pumpkolbens 21. Das als lineare Skala Anzeigeelement 30 weist im vorliegenden Beispiel 11 Teilstriche auf, wobei jeder Teilstrich 0,1 ml bedeutet.

Ebenfalls in Fig. 1 gezeigt ist ein zu vermessender Luftspalt 200 mit einer Luftspaltdicke D. Die Luftspaltdicke D beträgt im vorliegenden Beispiel 5mm. Der Hydraulik-Messkopf 10 ist im Luftspalt 200 angeordnet. Der Luftspalt 200 wird durch zwei parallel Begrenzungsflächen 201, 202 definiert. Im vorliegenden Beispiel repräsentieren die Begrenzungsflächen 201, 202 eine Blechpaket-Pol-Paarung eines Generators einer Windenergieanlage,

In Fig. 1a) ist der als Druckkissen ausgebildete Hydraulik-Messkopf 10 in nicht expandiertem Zustand (Ausgangszustand) mit einem Hydraulikflüssigkeitsvolumen V10ne im nicht expandierten Zustand gezeigt. Der Pumpkolben 21 der Kolbenpumpe 20 ist im ausgezogenen Zustand gezeigt, d.h. in dem Zustand in dem der als Druckkissen ausgebildete Hydraulik-Messkopf 10 nicht expandiert ist. Ein Pfeil an dem als lineare Skala ausgebildeten Anzeigeelement 30 zeigt ein Hydraulikflüssigkeitsvolumen V20ne in der Kolbenpumpe 20 bei nicht expandiertem Hydraulik-Messkopf 21 an. Im Fig. 1a) gezeigten Zustand befinden sich insgesamt 1,1 ml Hydraulikflüssigkeit H Spaltmessgerät 100, wovon 1,1 ml im der Kolbenpumpe 20 und 0 ml in dem Hydraulik-Messkopf 10 befindlich sind, d.h. V20ne = 1,1 ml und V10ne = 0 ml. Etwaige Totvolumina im Hydraulik-Messkopf 10, in der Kolbenpumpe 20, sowie im Hydraulikschlauch 40 werden aus Einfachheitsgründen vernachlässigt, d.h. als 0ml angenommen.

Ein Druckbeaufschlagen des Hydraulik-Messkopfes 10 erfolgt mittels Hineindrücken des Pumpkolbens 21 der Kolbenpumpe 20. Dabei expandiert der Hydraulik-Messkopf 10 in Expansionsrichtung E. Vorliegend ist der Hydraulik-Messkopf 10 ausgebildet, dass sie bei Druckbeaufschlagung proportional zum Anstieg des in den Hydraulik-Messkopf eingebrachten Hydraulikflüssigkeitsvolumens in Erstreckungsrichtung Luftspaltdicke D, die vorliegend mit der Expansionsrichtung E übereinstimmt, expandiert. Der Hydraulik-Messkopf 10 wird solange druckbeaufschlagt, bis sie an den Begrenzungsflächen 201, 202, die den Luftspalt 200 definieren, anliegt.

In Fig. 1b) ist der als Druckkissen ausgebildete Hydraulik-Messkopf 10 nun in expandiertem Zustand mit einem Hydraulikflüssigkeitsvolumen V10e im expandierten Zustand gezeigt. Der Hydraulik-Messkopf 10 liegt an den Begrenzungsflächen 201, 202, die den Luftspalt 200 definieren, an. Der Pumpkolben 21 der Kolbenpumpe 20 ist in eine maximal eingeschobenen Zustand gezeigt, d.h. in dem Zustand in dem der als Druckkissen ausgebildete Hydraulik-Messkopf 10 expandiert ist und an den Begrenzungsflächen 201, 202 anliegt.

Ein Pfeil an dem als lineare Skala ausgebildeten Anzeigeelement 30 zeigt ein Hydraulikflüssigkeitsvolumen V20e in der Kolbenpumpe 20 bei expandiertem Hydraulik-Messkopf 10 an. Im Fig. 1b) gezeigten Zustand befinden sich insgesamt 1,1 ml Hydraulikflüssigkeit H Spaltmessgerät 100, wovon 0,6 ml im der Kolbenpumpe 20 und 0,5 ml in dem Hydraulik-Messkopf 10 befindlich sind, d.h. V20e = 0,6 ml und V10e = 0,5 ml. Die Summe der Hydraulikflüssigkeitsvolumina der Hydraulik-Messkopf 10 und des Kolbenpumpe 20 sind konstant, d.h. V20ne + V10ne = V20e + V20e = 1,1 ml.

Es wurden demnach - ausgehend von Fig. 1a) - 0,5 ml (also V20ne - V20e) in den Hydraulik-Messkopf 10 eingebracht, wobei diese maximal auf die Luftspaltdicke D von 5mm expandiert ist. Da die Expansion wie oben beschrieben proportional erfolgt, entspricht 0,1 ml (ein Teilstrich) eingebrachte Hydraulikflüssigkeit H einer Expansion des Hydraulik-Messkopfes 10 um 1mm. Die Luftspaltdicke D des Luftspalts 200 kann im vorliegenden Beispiel an dem als lineare Skala ausgebildeten Anzeigeelement 30 durch Zählen der Teilstriche abgelesen werden: Ein Einschub des Pumpkolbens 21 um 5 Teilstriche bedeutet eine Luftspaltdicke D von 5mm. Da die Skale im vorliegen Beispiel ml ausweist, ist sie ein Anzeigeelement 30 zur unmittelbaren Anzeige eines in den Hydraulik-Messkopf 10 bis zu dessen Anlage an die Begrenzungsflächen 201, 202 eingebrachten Hydraulikflüssigkeitsvolumens.

Im vorliegenden Beispiel wäre es alternativ möglich, die Teilstriche der Skala direkt mit der Einheit Millimeter auszuweisen. Dann wäre die Skala ein Anzeigeelement 30 zur mittelbaren Anzeige eines in den Hydraulik-Messkopf 10 bis zu dessen Anlage an die Begrenzungsflächen 201, 202 eingebrachten Hydraulikflüssigkeitsvolumens,

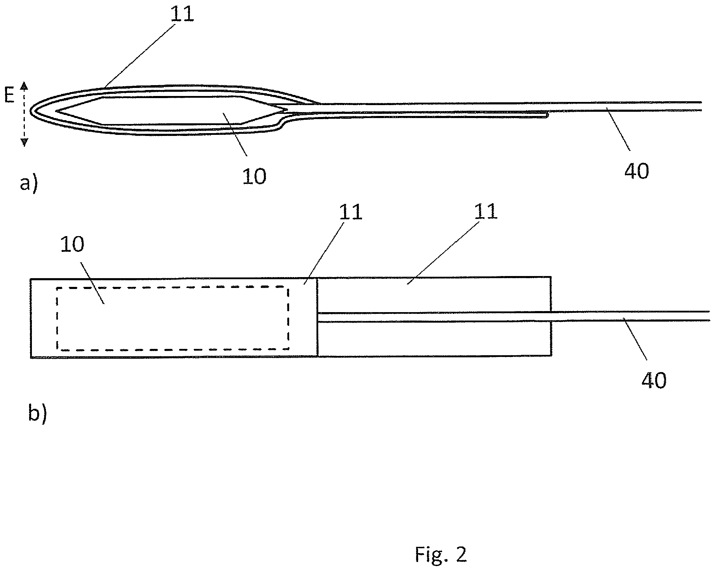

Fig. 2 zeigt schematische Darstellung einer bevorzugten Ausgestaltung eines Hydraulik-Messkopfes 10 eines erfindungsgemäßen Spaltmessgeräts 100, wobei Kolbenpumpe 20 und Anzeigeelement 30 nicht dargestellt sind. Dabei zeigt Fig. 2a) eine Seitenansicht des Hydraulik-Messkopfes 10 mit eingezeichneter Expansionsrichtung E. Eine Draufsicht auf den Hydraulik-Messkopf 10 ist in Fig. 2b) gezeigt. Der Hydraulik-Messkopf 10 ist durch seinen Blechstreifen 11 bedeckt und gestrichelt dargestellt.

Der Hydraulik-Messkopf 10 ist als Druckkissen ausgebildet und mit einem Hydraulikschlauch 40 verbunden, der seinerseits an eine (nicht gezeigte) Kolbenpumpe 20 angeschlossen ist. Der Hydraulik-Messkopf 10 ist in nicht expandiertem Zustand dargestellt. Der Hydraulik-Messkopf 10 ist mit dem Blechstreifen 11 umwickelt, so dass der Hydraulik-Messkopf 10 bei Anlage an die Begrenzungsflächen (z.B. Begrenzungsflächen 201, 202 der Fig. 1) geschützt ist. Die einander gegenüberliegenden Abschnitte des Blechstreifens 11 sind bikonvex zueinander angeordnet, um eine proportionale Expansion des Hydraulik-Messkopfes 10 zu begünstigen.

Im Sinne einer besseren Handhabbarkeit beim Einführbarkeit der Hydraulik-Messkopf 10 in einen Luftspalt verläuft der Hydraulikschlauch 40 abschnittsweise auf dem Blechstreifen 11 und wird durch diesen gestützt. Wie ebenfalls aus Fig. 2a) ersichtlich, ist der Hydraulik-Messkopf 10 seitlich nicht verdeckt.

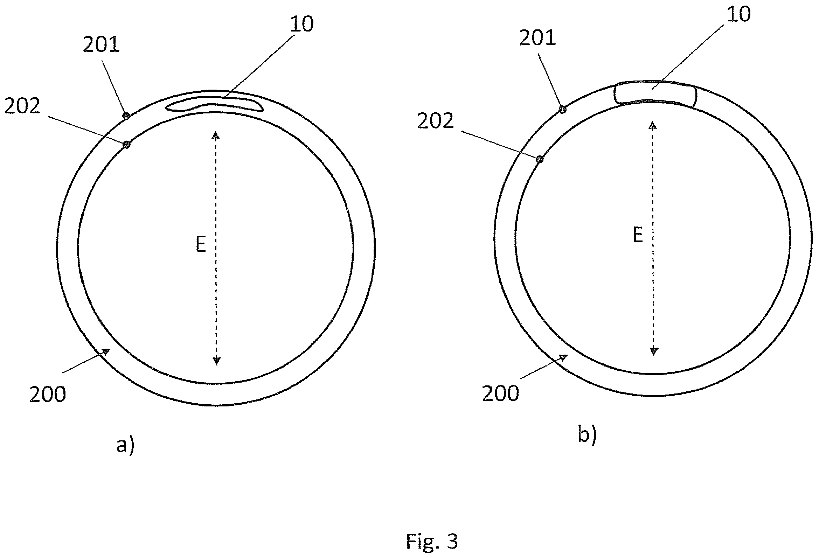

Ein Hydraulik-Messkopf 10 in Fig. 3 ist in einem Luftspalt 200 eines nicht genauer dargestellten Ringgenerators einer Windenergieanlage angeordnet. Die Begrenzungsflächen 201, 202, die den Luftspalt 200 definieren sind gekrümmt und verlaufen konzentrisch. In Fig. 3a) ist der Hydraulik-Messkopf 10 in nicht expandiertem Zustand (Ausgangszustand) gezeigt. Der Hydraulik-Messkopf 10 ist vorliegend mit etwa gleichem Krümmungsradius wie der Luftspalt 200 ausgebildet, so dass er nur wie gezeigt in einer Vorzugrichtung den Luftspalt 200 einlegbar ist. Bezogen auf den gekrümmten Luftspalt 200 verläuft die Expansionsrichtung E des Hydraulik-Messkopfes 10 radial. In tangentialer Richtung weist der der Hydraulik-Messkopf 10 eine größere Erstreckung als in radialer Richtung auf.

In Fig. 3b) hingegen zeigt den Hydraulik-Messkopf 10 in expandiertem Zustand. Der Hydraulik-Messkopf 10 ist durch Druckbeaufschlagung mit einer Hydraulikflüssigkeit derart expandiert, dass der Hydraulik-Messkopf 10 an den Begrenzungsflächen 201, 202, die den Luftspalt 200 definieren, anliegt,

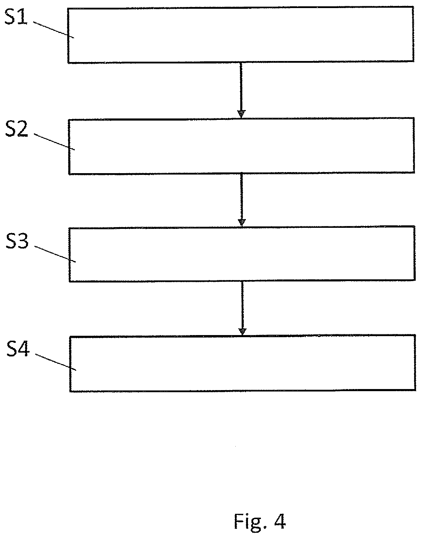

Bei einem exemplarischen Luftspaltmessungsverfahren in Fig. 4 wird in einem ersten Schritt S1 eine durch Druckbeaufschlagung expandierbare Hydraulik-Messkopf in einen zu vermessenden Luftspalt eingebracht. In einem zweiten Schritt S2 wird der Hydraulik-Messkopf mit einer Hydraulikflüssigkeit derart druckbeaufschlagt, dass die expandierte Hydraulik-Messkopf an die Begrenzungsflächen, die den Luftspalt definieren, anliegt. In einem dritten Schritt S3 wird ein in den Hydraulik-Messkopf eingebrachten Hydraulikflüssigkeitsvolumens als Maß für die Luftspaltdicke des Luftspalts bestimmt. In einem vierten Schritt S4 wird der Hydraulik-Messkopf aus einem Expansionszustand in einen Ausgangszustand durch Erzeugen eines Unterdrucks in dem Hydraulik-Messkopf zurückgeführt.

### Bezugszeichenliste

- 10: Hydraulik-Messkopf
- 11: Blechstreifen
- 20: Kolbenpumpe
- 21: Pumpkolben
- 22: Bedienelement
- 30: Anzeigeelement
- 40: Hydraulikschlauch
- 100: Spaltmessgerät
- 200: Luftspalt
- 201, 202: Begrenzungsflächen des Luftspalts
- D: Luftspaltdicke
- E: Expansionsrichtung
- H: Hydraulikflüssigkeit
- S1..S4: Verfahrensschritte
- V10e: Hydraulikflüssigkeitsvolumen des expandierte Hydraulik-Messkopfes
- V10ne: Hydraulikflüssigkeitsvolumen des nicht expandierten Hydraulik-Messkopfes
- V20e: Hydraulikflüssigkeitsvolumen in der Kolbenpumpe bei expandiertem Hydraulik-Messkopf
- V20ne: Hydraulikflüssigkeitsvolumen in der Kolbenpumpe bei nicht expandiertem Hydraulik-Messkopf

## Patentansprüche

1. Spaltmessgerät (100) zum Vermessen einer Luftspaltdicke (D), insbesondere eines Generators einer Windenergieanlage, mit:
- einem durch Druckbeaufschlagung expandierbaren Hydraulik-Messkopf (10) zum Einbringen in einen zu vermessenden Luftspalt (200), wobei der Hydraulik-Messkopf als Druckkissen ausgebildet,
- einer Kolbenpumpe (20) zur Druckbeaufschlagung und Expansion des Hydraulik-Messkopfes (10) mit einer Hydraulikflüssigkeit (H), wobei der Hydraulik-Messkopf (10) dazu eingerichtet ist, mittels Expansion an Begrenzungsflächen (201, 202), die den Luftspalt (200) definieren, derart in Anlage zu gelangen, dass nach Anlage an den Begrenzungsflächen (201, 202) eine weitere Expansion in Richtung der Begrenzungsflächen (201, 202) und quer und/oder tangential zu diesen, unmöglich ist,
- einem Anzeigeelement (30) zur Anzeige eines in den Hydraulik-Messkopf (10) bis zu dessen Anlage an die Begrenzungsflächen (201, 202) eingebrachten Hydraulikflüssigkeitsvolumens (V10e) als Maß für die Luftspaltdicke (D) des Luftspalts (200).

2. Spaltmessgerät (100) nach Anspruch 1, **dadurch gekennzeichnet, dass** der Hydraulik-Messkopf (10) eine Kapselung aufweist, insbesondere einen Blechstreifen (11).

3. Spaltmessgerät (100) nach Anspruch 1 oder 2, **dadurch gekennzeichnet, dass** das Anzeigeelement (30) eine an der Kolbenpumpe (20) angeordnete Skala ist.

4. Spaltmessgerät (100) nach einem der vorangehenden Ansprüche, **dadurch gekennzeichnet, dass** die Kolbenpumpe (20) zur manuellen Betätigung ausgebildet ist und ein Hydrauliksystemdruck bevorzugt unter 2 Bar liegt.

5. Spaltmessgerät (100) nach einem der vorangehenden Ansprüche, **dadurch gekennzeichnet, dass** der Hydraulik-Messkopf (10) und die Kolbenpumpe (20) über einen Hydraulikschlauch (40) miteinander verbunden und mit einer Hydraulikflüssigkeit (H) anwendungsbereit befüllt sind.

6. Luftspaltmessungsverfahren zur Vermessung einer Luftspaltdicke (D), insbesondere eines Generators einer Windenergieanlage, mit den Schritten:
- (S1) Einbringen eines durch Druckbeaufschlagung expandierbaren als Druckkissen ausgebildeten Hydraulik-Messkopfes (10) in einen zu vermessenden Luftspalt (200),
- (S2) Druckbeaufschlagen und Expansion des Hydraulik-Messkopfes (10) mit einer Hydraulikflüssigkeit (H) derart, dass der expandierte Hydraulik-Messkopf (10) an die Begrenzungsflächen (201, 202), die den Luftspalt (200) definieren, derart anliegt, dass nachdem dieser an den Begrenzungsflächen (201, 202) anliegt ein weiteres Expandieren in Richtung der Begrenzungsflächen (201, 202) und quer und/oder tangential zu diesen, unmöglich ist,
- (S3) Bestimmen eines in den Hydraulik-Messkopf (10) bis zu dessen Anlage an die Begrenzungsflächen (201, 202) eingebrachten Hydraulikflüssigkeitsvolumens (V10e) als Maß für die Luftspaltdicke (D) des Luftspalts (200).

7. Luftspaltmessungsverfahren nach Anspruch 6, **dadurch gekennzeichnet, dass** das Bestimmen des in den Hydraulik-Messkopf (10) eingebrachten Hydraulikflüssigkeitsvolumens (V10e) ein Ablesen eines Anzeigeelements (30) umfasst.

8. Luftspaltmessungsverfahren nach Anspruch 6, **dadurch gekennzeichnet, dass** das Druckbeaufschlagen manuell erfolgt.

9. Luftspaltmessungsverfahren nach Anspruch 6, **gekennzeichnet durch** den Schritt:
- (S4) Rückführen des Hydraulik-Messkopfes (10) aus einem Expansionszustand in einen Ausgangszustand durch Erzeugen eines Unterdrucks in dem Hydraulik-Messkopf (10).

## Claims

1. Gap measuring device (100) for measuring an air-gap thickness (D), in particular of a generator of a wind turbine, comprising:
- a hydraulic measuring head (10), which is expandable by pressurization, for insertion in an air gap (200) to be measured, wherein the hydraulic measuring head (10) is a pressure cushion,
- a piston pump (20) for pressurizing and expanding the hydraulic measuring head (10) with a hydraulic fluid (H), the hydraulic measuring head (10) being set up to come, by means of expansion, to bear against the delimiting faces (201, 202) that define the air gap (200), such that upon bearing against the delimiting faces (201, 202) a further expansion towards the delimiting faces (201, 202) and transverse and/or tangential to these is impossible,
- an indicator element (30) for indicating, as a measure of the air-gap thickness (D) of the air gap (200), a hydraulic fluid volume (V10e) put into the hydraulic measuring head (10) until it bears against the delimiting faces (201, 202).

2. Gap measuring device (100) according to claim 1, **characterized in that** the hydraulic measuring head (10) has an enclosure, in particular a sheet-metal strip (11).

3. Gap measuring device (100) according to claim 1 or 2, **characterized in that** the indicator element (30) is a scale disposed on the piston pump (20).

4. Gap measuring device (100) according to any one of the preceding claims, **characterized in that** the piston pump (20) is designed for manual actuation and a hydraulic system pressure is preferably less than 2 bar.

5. Gap measuring device (100) according to any one of the preceding claims, **characterized in that** the hydraulic measuring head (10) and the piston pump (20) are connected to each other via a hydraulic hose (40) and filled with a hydraulic fluid (H), so as to be ready for use.

6. Air-gap measurement method for measuring an air-gap thickness (D), in particular of a generator of a wind turbine, comprising the steps:
- (S1) inserting a hydraulic measuring head (10), which is expandable by pressurization, into an air gap (200) to be measured, wherein the hydraulic measuring head (10) is a pressure cushion,
- (S2) pressurizing and expanding the hydraulic measuring head (10) with a hydraulic fluid in such a manner that the expanded hydraulic measuring head bears against the delimiting faces that define the air gap (200), such that upon bearing against the delimiting faces (201, 202) a further expansion towards the delimiting faces (201, 202) and transverse and/or tangential to these is impossible,
- (S3) determining, as a measure of the air-gap thickness (D) of the air gap (200), a hydraulic fluid volume (V10e) put into the hydraulic measuring head until the latter bears against the delimiting faces.

7. Air-gap measurement method according to claim 6, **characterized in that** the determination of the hydraulic fluid volume (V10e) put into the hydraulic measuring head (10) includes read-off of an indicator element (30).

8. Air-gap measurement method according to claim 6, **characterized in that** the pressurization is effected manually.

9. Air-gap measurement method according to claim 6, **characterized by** the step:
- (S4) returning the hydraulic measuring head (10) from an expansion state to an initial state, by generating a negative pressure in the hydraulic measuring head (10).

## Revendications

1. Dispositif de mesure d'un entrefer (100) pour mesurer la taille d'un entrefer (D), en particulier d'un générateur d'une éolienne, avec :
- une tête de mesure hydraulique (10) expansible par sollicitation par pression à introduire dans un entrefer à mesurer (200), dans lequel la tête de mesure hydraulique réalisée en tant que coussin de pression,
- une pompe à piston (20) pour la sollicitation par pression et l'expansion de la tête de mesure hydraulique (10) avec un fluide hydraulique (H), dans lequel la tête de mesure hydraulique (10) est aménagée pour venir en application par expansion sur les surfaces de délimitation (201, 202), qui définissent l'entrefer (200), de sorte qu'après l'application sur les surfaces de délimitation (201, 202), une autre expansion en direction des surfaces de délimitation (201, 202) et transversalement et/ou de manière tangente à celles-ci est impossible,
- un élément d'affichage (30) pour l'affichage d'un volume de fluide hydraulique (V10e) introduit dans la tête de mesure hydraulique (10) jusqu'à son application sur les surfaces de délimitation (201, 202) en tant que mesure pour la taille d'entrefer (D) de l'entrefer (200).

2. Dispositif de mesure d'un entrefer (100) selon la revendication 1, **caractérisé en ce que** la tête de mesure hydraulique (10) présente un encapsulage, en particulier des bandes de tôle (11).

3. Dispositif de mesure d'un entrefer (100) selon la revendication 1 ou 2, **caractérisé en ce que** l'élément d'affichage (30) est une échelle agencée au niveau de la pompe à piston (20).

4. Dispositif de mesure d'un entrefer (100) selon l'une quelconque des revendications précédentes, **caractérisé en ce que** la pompe à piston (20) est réalisée pour un actionnement manuel et une pression de système hydraulique est de préférence inférieure à 2 bars.

5. Dispositif de mesure d'un entrefer (100) selon l'une quelconque des revendications précédentes, **caractérisé en ce que** la tête de mesure hydraulique (10) et la pompe à piston (20) sont reliées l'une à l'autre par le biais d'un tuyau hydraulique (40) et sont remplies prêtes à l'emploi d'un fluide hydraulique (H).

6. Procédé de mesure d'un entrefer pour mesurer une taille d'un entrefer (D), en particulier d'un générateur d'une éolienne, avec les étapes de :
- (S1) introduction d'une tête de mesure hydraulique (10) réalisée en tant que coussin de pression expansible par sollicitation par pression dans un entrefer à mesurer (200),
- (S2) sollicitation par pression et expansion de la tête de mesure hydraulique (10) avec un fluide hydraulique (H) de sorte que la tête de mesure hydraulique (10) expansée s'applique sur les surfaces de délimitation (201, 202), qui définissent l'entrefer (200), de sorte qu'après son application sur les surfaces de délimitation (201, 202), une autre expansion en direction des surfaces de délimitation (201, 202) et transversalement et/ou de manière tangente à celles-ci est impossible,
- (S3) détermination d'un volume de fluide hydraulique (V10e) introduit dans la tête de mesure hydraulique (10) jusqu'à son application sur les surfaces de délimitation (201, 202) en tant que mesure pour la taille d'entrefer (D) de l'entrefer (200).

7. Procédé de mesure d'un entrefer selon la revendication 6, **caractérisé en ce que** la détermination du volume de fluide hydraulique (V10e) introduit dans la tête de mesure hydraulique (10) comprend une lecture d'un élément d'affichage (30).

8. Procédé de mesure d'un entrefer selon la revendication 6, **caractérisé en ce que** la sollicitation par pression a lieu manuellement.

9. Procédé de mesure d'un entrefer selon la revendication 6, **caractérisé par** l'étape de :
- (S4) retour de la tête de mesure hydraulique (10) d'un état d'expansion à un état de départ par génération d'une dépression dans la tête de mesure hydraulique (10).
